# EUROPEAN PATENT SPECIFICATION

(11) **EP 0 667 942 B1**
(45) Date of publication and mention of the grant of the patent: **12.01.2000**
(21) Application number: 94910266.9
(22) Date of filing: 21.09.1992
(51) Int. Cl.: F16L 37/00

(54) **MEANS OF COUPLING OF NON-THREADED CONNECTIONS**
KUPPLUNGSVORRICHTUNG FÜR GEWINDELOSE VERBINDUNGEN
MOYEN D'ACCOUPLEMENT DE RACCORDS NON FILETES

(43) Date of publication of application: 23.08.1995
(60) Divisional application: 99100702.2
(73) Proprietor: PROPRIETARY TECHNOLOGY, INC., Bloomfield Hills, Michigan 48302-7048 (US)
(72) Inventor: BARTHOLOMEW, Donald Dekle, Westminster, SC 29693 (US)
(74) Representative: Harwardt, Günther, Dipl.-Ing.
(86) International application number: US9208007
(87) International publication number: WO9407077

(56) References cited:
- EP-A- 0 193 271
- WO-A-92/08920
- DE-A- 4 033 106
- DE-A- 4 142 640
- US-A- 2 521 127
- US-A- 3 668 754
- US-A- 4 105 226
- US-A- 4 243 254
- US-A- 4 526 411
- US-A- 4 643 466
- US-A- 4 712 813
- US-A- 4 828 297
- US-A- 4 828 297
- US-A- 4 832 378
- US-A- 4 842 309
- US-A- 4 844 515
- US-A- 4 852 239
- US-A- 5 105 787

## Description

### BACKGROUND OF THE INVENTION

### 1. Field of the Invention

The present invention relates to a non-threaded connector assembly for providing a connection between fluid conveying conduits wherein the connector housing has a limited bore depth.

### 2. Description of Related Art

In the automotive industry, as well as for many other industries, the need always exists for low-cost, reliable and easy to assemble components. This need is especially apparent with respect to providing a connection between fluid conveying conduits, such as fuel or refrigerant lines.

Typically high pressure forces are associated with connector assemblies operable where the bore depth of the connector housing is limited. An assembly which can be screwed together is required. Substantial assembly time can be accumulated in screwing and properly tightening a fitting. Also, re-tightening of the fitting may be required to maintain the seal after the automobile or other system has been put into use.

US-A-4 832 378 discloses a connector assembly for use in communicating a fluid comprising a hollow socket and a plug which fits therein and which is releasably locked in position by a spring clip. The plug has an outer portion which is received within the socket, the outer portion carrying an O-ring for sealing with the bore of the socket. The outer portion has a cylindrical surface to receive the O-ring and a shoulder against which the O-ring abuts. Each of the plug and the socket has a groove in which the spring clip is received to hold the plug in place.

In this construction there is no piloting of the plug in the bore in the socket on the inner side of the O-ring seal. Nor is there any piloting bushing between the seal and the outer portion of the plug so that the latter is not well piloted in the bore in the socket which may cause sealing problems.

### 3. Object of the Invention

It is an object of the present invention to provide a connector assembly that utilizes the actual conduit leading to the attaching point as the part of the connection that is sealed to the mating (female) portion.

Another object of the present invention is to provide a connector assembly for providing a connection between fluid conveying conduits where the connector housing has a limited bore depth and the conduit is properly guided.

Another object of the present invention is to provide swivelling conduit members which limit the forces exerted on the retaining elements, and conduits.

It is still a further object of the present invention to provide a retainer element which secures both the conduit and the sealing ring within an axial bore of the housing.

It is still a further object of this present invention to show that by not having to cut or form a groove (to receive the seal) in the conduit or in the female portion, it is possible to avoid the problems that come with a moulded or machined groove for the sealing portion, that tend to produce less reliability in the sealing of the connection.

It is still a further object of the present invention to provide a connection that does not require threading to retain the mating portions together.

### SUMMARY OF THE INVENTION

In the light of the foregoing problems and in order to fulfil one or more of the foregoing objects and desires, there is provided a connector assembly for use in communicating a fluid, said connector assembly comprising: a male conduit having a longitudinal bore, a first part and a second part and an expanded diameter member firmly affixed to the second part; a female housing having a longitudinal bore therethrough, said female housing further having a substantially lateral abutting wall, the first part being arranged external of the housing; a seal sealing against an ungrooved internal portion of the bore in said female housing; and a retainer having a portion which expands within said female housing bore longitudinally internal to said abutting wall, said housing including means for abutting the retainer for the purpose of preventing the separation of said conduit from said housing; characterised in that a second part of said male conduit which is integral with said first part extends within said female housing, in that the seal surrounds and seals with an ungrooved peripheral portion of said second part, in that said expanded diameter member directly abuts one side of said retainer or abuts one side of said retainer by an intermediate retainer element interposed between said expanded diameter member and said retainer, in that one bushing is firmly affixed to said second part and in that the bushing is arranged close to the end portion of the male conduit to retain the seal on the male conduit.

Additional objects and advantages of the present invention will become apparent from reading the detailed description of the preferred embodiments which makes reference to the following set of drawings in which are shown the connection that is disclosed.

### BRIEF DESCRIPTION OF THE DRAWINGS

FIG. 1 is a side elevation cross section of the connector in a first form;
FIG. 2 is a side elevation cross section of a second form of the connector showing an added bushing conduit stabilizing means that also acts to retain the seal; and
FIG. 2A is a detail view of the expanded diameter member of the conduit shown in Figure 2.

### DETAILED DESCRIPTION OF THE PREFERRED EMBODIMENTS

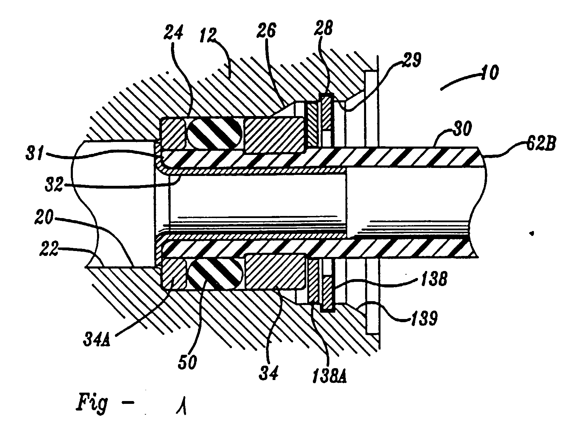

Referring to FIG. 1, a conduit 30 is to be sealingly joined to and retained in a body 12 as connection 10. Body 12 is shown in FIG. 1 as a machined port in some device, but could be any material, with a thin wall outside the internal bores, or a part of some other connecting device.

The internal bore configuration of the connecting portion is composed of a bore 22 which will receive the end portion 31 of a liquid carrying conduit 30, a bore 24 to confine and squeeze down the outside diameter of a seal 50, a tapering down bore 26 that is less than 45° per side angle as measured from the centre axis of the bore, a retainer bore 29 larger than bore 24, and a recessed bore 28 that is larger in diameter than the retainer bore 29.

The conduit end 31 is assembled into this combination of bores.

In FIG. 1 the conduit 30 carries a (seal holding, conduit centring in the female bore, cooperating with the retainer) bushing 34 that has been assembled onto conduit 30 at a distance far enough back from the end 31 of the conduit to effect "politing" in the bore 22, while leaving length for the seal 50, and some distance in seal bore 24 to provide a seal retaining and piloting in bore 24 function. Bushing 34 also is long enough to provide a length in tapering bore 26 to have its exterior end engage an intermediate retainer element 138A which engages a spring retainer 138, and thus transfers the forces that would separate conduit 30 from housing female portion 12, while retaining seal 50 in bore 24 with the interior end of bushing. The intermediate retainer element 138A may be omitted where the bushing 34 is large enough to engage the retainer 138.

Spring retainer 138 acts to receive these separation forces on conduit 30 from bushing 34, and transfer those forces to female housing 12 by means of the rear wall of recessed bore 28, which is provided in retainer bore 29 of the female body 12. A lead-in chamfer 139 serves to lead-in retainer 138. The spring retainer 138 can be a retainer that is squeezed down towards the axis of conduit 30 by the female housing body 12 using lead-in chamfer 139 and retainer bore 29 (a quick connect), or separate means (that are not shown) may be used to squeeze retainer 138 down toward the axis of conduit 30 (a non-quick connector).

An additional bushing 34A is provided to retain seal 50 on conduit 30. A reinforcement 32 is inserted in the conduit 30 in the area under the squeezed on bushing 34. The reinforcement also acts to support the squeezed on retaining bushing 34A. Bushing 34 also may act to pilot conduit 30 in the housing 12 by acting on the inner side of seal 50 in a manner similar to bushing 34 which acts to pilot conduit 30 on the outer side of seal 50.

An important feature of this type of connector is that the conduit 30 itself is used for the male portion of the male/female type connection 10. This allows the conduit 30 to be finished on its outside, in the area of seal 50, with a surface consistent with the requirements for sealing on the inside of seal 50. Also, this allows conduit 30 to have an expanded diameter member formed by the bushing 34, combining seal retention, piloting in the seal bore 24, and cooperating with a retaining means 138A, 138.

In FIG. 1 the bushing 34 is shown as a separate part that is assembled to conduit 30. Also this combination of functions allows the retaining and sealing of a conduit (30) in the length (or depth) that is presently devoted to thread-in (not shown), or flat-thread-in (not shown) type connections. An additional advantage (contrary to a thread-in connection), is that this connection will allow conduit 30 to swivel. Swivelling reduces the forces that may be applied to connection 10, and reduces the forces that may be applied to conduit 30. For the first time, by using the connection shown in FIG. 1, a manufacturer has the option of providing a female "port" of the same depth for threaded or flare connections, or the connection shown in FIG. 1. The connection 10 also allows the use of an elastomeric seal 50 (which is more easily deformed than metal) for more reliable sealing of the connection 10.

It can be appreciated that having a connection 10, which can be accomplished within the diameter and depth of the heretofore normal way of making a connection between a conduit and a device can be very advantageous to those who provide that connection. 62B represents a portion of conduit 30 which may be a part of some other connector (not shown) or a continuation of a conduit (not shown).

It is often possible to have bushing 34 of FIG. 1 combined with the conduit 30 being integral with the conduit and of the same material. In this case to have the proper fit for piloting conduit 30 and retaining seal 50, a second diameter sizing operation may be required on bushing 34.

The combined axially extending enlarged conduit 30 diameter 34 is convenient when conduit 30 is part of some non-straight device, and it is not practical to put a bend in the type of piping or conduit (not shown) that is used. Note that even where the expanded diameter member is cast or moulded onto conduit portion 30 the non-grooved surface of the conduit 30, under seal 50 is still the same. The casting or moulding method puts at least the portion of the male part of the connection 10 that goes into bore 24 all in a female portion of the tooling, so there are no parting lines that may defeat the sealing of the inside diameter of seal 50.

One of the most important advantages of connection 10 shown in FIG. 1, from the standpoint of manufacturing a reliable connection, is the feature that connection 10 does not require a groove in either housing female portion 12, or conduit portion 30 to provide a reliable sealing surface for seal 50. A little thought will show that female grooves for seal 50 are not readily inspectable in small diameters, and male surface grooves, although inspectable, have "partlines" in the sealing area, if they are formed, cast or moulded, for example. These "partlines" are caused by the tooling that forms, or moulds. the connector portion, and they can disrupt the sealing of the connection 10.

Shown in FIG. 1 is intermediate retainer element 138A. When one is trying to accommodate standard readily available components, and make a connection 10 which requires no more depth and diameter than a thread-in, or flare, seal, then it is sometimes desirable to use the intermediate retainer element 138A when the retainer 138 inside surface does not properly abut the outside surface of the end of bushing 34.

In any connection between a conduit and a device, or conduit and a conduit, there are two (2) first considerations; sealing of the two halves (in the case of connector 10 a male and female), and the retention together or the two halves of the connection.

The sealing requirement of the disclosed connection 10 is not encumbered by a manufacturing process that could leave axial. or around the circular surface, lines or marks that would tend to defeat the sealing. The male half has been primarily discussed, but one schooled in making bores will realize that the female half has also been treated so as to not have any recessed diameter sealing means bore. The female bore may be produced with a "form drill" and a "form reamer" in all but the bigger recessed bore 28 for the retainer 138, assuring both concentricity and a surface of bore 24 that is good for sealing. To reduce the accommodation of movement required by the sealing means, it is necessary to stabilize the male within the female. This is accomplished in the connection 10 by having a pilot on each side (along the connector 10 axis) of the sealing means.

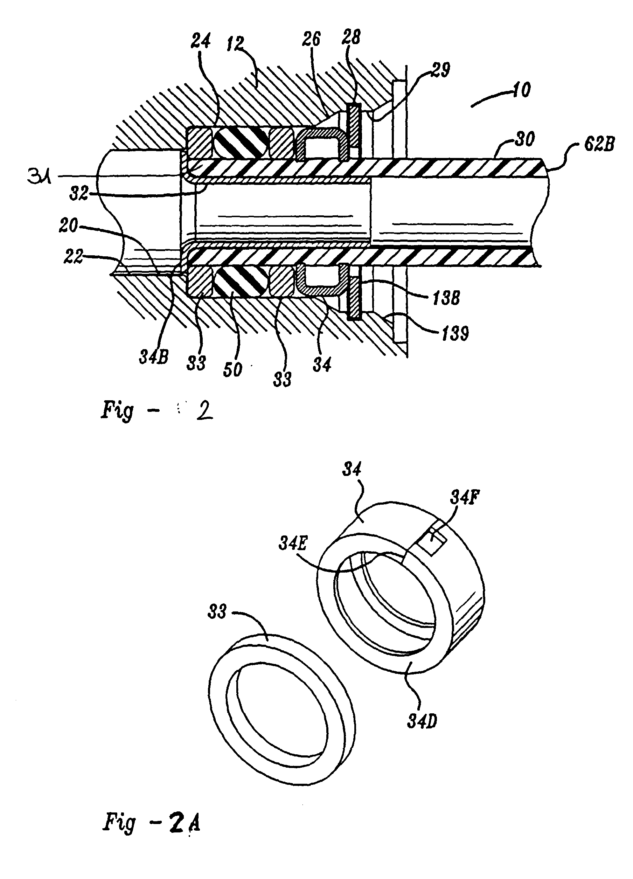

This is most true for an O-ring sealing means, and less true for other elastomeric sealing means like "U" cup or other types of seals that are more tolerant of male axis - female axis relative movement in the sealing area. Referring to FIG. 2, the disclosed connector 10 is shown in another embodiment. The bushings consist of two bushings 33 and expanded diameter member 34. In FIG. 1 the bushings have involved the conduit expanded diameter member 34 and a separate bushing 34A at the conduit end and the flanged end of a conduit reinforcing means, all of which produce the desired result of piloting the conduit (male) in the housing (female) on each side of the sealing means.

The second principal factor is the retention together of the male and female portions of a connection.

The inventor has devised a means of providing an abutting surface that can be mounted on tubing (or conduit) very easily and quickly. This means is more adequately described in a different patent application. but is included here in FIG. 2 to show that a bushing 33 may be used between this means and the sealing means so to serve both the purpose of providing a bushing (as above described) and a smooth surface for the side of the sealing means to abut. In use this will prevent damage to the sealing means so by any uneven edge 34E of member 34 shown in FIG. 2A.

In FIG. 2 bushings 33 may provide the outside diameter required for the fit to bore 24, and it is not necessary for member 34 to provide that closely held diameter. This means that member 34 can be somewhat smaller in outside diameter than bushings 33 and thus have a larger tolerance of outside diameter.

In FIGS. 2 and 2A member 34 is used primarily in the retention means function. Flanges 34D of member 34 deform the conduit 30, and because of their strength and the conduit deformation (which is limited by closing up the gap at the ends of the formed ring - see 34E) member 34 provides the resistance to forces that would separate conduit 30 from housing 22. Member 34 now may be used as an abutting surface for the retaining means, which is snap-ring 138. Snap-ring 138 acts to transfer these separation forces from conduit 30 to the female abutting wall 27, as in FIG. 1.

Member 34 may be sprung open sufficiently to be installed over conduit 30 by use of a screw driver, or some other tool by use of area 34F.

It should also be noted that in FIGS. 1 and 2 the disclosed type of connector 10 will allow the conduit 30 (male) swivel relative to the female. This swivelling is very important to reducing the mechanical stresses and forces on not only the female, but on the complete system leading to and from connection 10, as well as the male.

To recapitulate FIGS. 1 and 2 have shown a method of making a connection that has the following features:

The connection is made with a male portion (the conduit and the parts added onto, or in the conduit) which is sealably connected to a female port (of the proper male end receiving shape).

The retention of the connected male and female portion is performed by a retainer which locks into a groove that is put into a female bore in the case of a machined female bore, or in as a recess in a stamped female housing, or through the female portion from the exterior of the female portion as will be shown in a later figure.

The retaining means merely acts to transfer the forces that would act to separate the male from the female portion by transferring the separating force from the back side (not the outside diameter) of an axially extending enlarged diameter of the conduit to an abutting wall provided in the female portion by the rear of the groove that receives the snap-ring.

The retaining means is a springing device that may be squeezed down in diameter by a tool, or by the female housing or a stamped female. Or, installed by hand or tool (again squeezing down, again by the female housing) through the female housing in the case of a molded housing where it is practical to use "windows" through the wall making the outside and inside surfaces of the female housing. The retaining means may be more than one part.

The axially extending enlarged diameter of the conduit may either be a part of the conduit or added onto the conduit:
But it must serve the following purposes.
Act with the retaining means to prevent separation of the male from the female.
Support the male portion in the female portion.
Prevent the sealing means from being expelled from the female portion.

In front of the sealing means (deeper into the female) a second means of piloting the conduit portion (male) in the female.

This is done without having to put part lines from molding, that can be introduced by making a groove in the conduit, or other possible sealing disruptors on the conduit surface where the sealing means seals the conduit. The seal is to the conduit portion, not some intermediate member in that area, and not by means of a groove formed in the male conduit or female housing.

Any second means of piloting is added over the conduit, or from the inside of the connector housing, directly on the conduit. The inner bushing is separate from the conduit to preserve the sealing area of the conduit, and to prevent the seal from being separated from the conduit.

The seal is any elastomer configuration, or combination of elastomeric with the appropriate separator, etc.

The combination allows the manufacture of a connector in the diameter and length occupied by a thread-in connector, or a flared thread-in (to retain) connector.

The connector of FIGS. 1 and 2 is constructed in a manner that is easier to accomplish when a very reliable connection, that requires very little of the installer, is desired.

The connection swivels.

The connector female may have the capability to squeeze down the retaining means to a smaller outside diameter. No outside tool is required to perform this function.

This type of connection can be used to connect the conduit itself (which is used as a male) to a female port, and have the sealing required take place on the conduit itself, with no threading required to secure the male portion to the female portion. In the case of a conduit that can be bent, within the envelope of space that is available, the connection can be made with no welding, or screwing, or separate connection of the conduit leading to the attaching point.

The combination of providing a connection in the manner described in FIGS. 1 and 2 provides a combination of features that is highly desirable to those who must make a connection that will fit within the space provided for the smallest connections (for the conduit size) that have been heretofore used.

## Claims

1. A connector assembly for use in communicating a fluid, said connector assembly comprising:
a male conduit (30) having a longitudinal bore, a first part (62B) and a second part (31) and an expanded diameter member (34) firmly affixed to the second part;
a female housing (12) having a longitudinal bore (22, 24, 26, 28, 29) therethrough, said female housing further having a substantially lateral abutting wall, the first part (62B) being arranged external of the housing;
a seal (50) sealing against an ungrooved internal portion (24) of the bore in said female housing; and
a retainer (138) having a portion which expands within said female housing bore (29) longitudinally internal to said abutting wall, said housing (12) including means (28) for abutting the retainer (138) for the purpose of preventing the separation of said conduit (30) from said housing (12);
characterised in that a second part (31) of said male conduit (30) which is integral with said first part (62B) extends within said female housing, in that the seal (50) surrounds and seals with an ungrooved peripheral portion of said second part (31), in that said expanded diameter member (34) directly abuts one side of said retainer (138) or abuts one side of said retainer by an intermediate retainer element (138A) interposed between said expanded diameter member (34) and said retainer (138), in that one bushing (33, 34A) is firmly affixed to said second part (31) and in that the bushing (34A) is arranged close to the end portion of the male conduit (30) to retain the seal (50) on the male conduit (30).

2. The connector according to claim 1 wherein a bushing (33, 34A) is disposed between said seal (50) and the end (31) of the conduit received in said longitudinal bore.

3. The connector according to claim 1 wherein a bushing (33) is disposed between said expanded diameter member (34) and said seal (50).

4. The connector according to claim 1 wherein there is a first bushing (33, 34A) disposed between the seal (50) and the end (31) of the conduit received in said longitudinal bore and a second bushing (33) disposed between the seal (50) and the expanded diameter member (34).

5. The connector according to claim 4 wherein said expanded diameter member (34) does not limit the departure of the conduit axis from the housing axis, one of said bushings (33) performing said limiting, said bushing not being removable from said conduit and being located between said expanded diameter member (34) and said seal (50).

6. The connector according to any preceding claim wherein said conduit (30) is reinforced on the inside thereof by a separate reinforcement (32) that is located adjacent the end (31) of said conduit which is received in said longitudinal bore.

7. The connector of claim 6 wherein said reinforcement (32) includes a portion (34B) that limits departure of the conduit axis from the housing axis and prevents removal of said seal (50) from said conduit.

8. The connector of claim 7 wherein said portion (34B) of said reinforcement prevents removal of the bushing (33, 34A) which is located between said seal (50) and said end (31) of the conduit, said bushing (33, 34A) also acting to limit the departure of said conduit axis from said housing axis.

9. The connector according to any of claims 1 to 8 wherein said expanded diameter member (34) is a separate bushing that is permanently attached to said conduit.

10. The connector according to any preceding claim wherein there is a ring (138A) interposed between said expanded diameter member (34) and said retainer (138).

11. The connector according to any preceding claim which includes means (139) to lead said retainer (138) into the bore of said housing.

12. The connector according to claim 11 wherein said means (139) causes a reduction of the outside diameter of said retainer.

13. The connector according to any preceding claim wherein said seal (50) seals the internal portion of said housing from intrusion of material from the exterior of said conduit and said housing.

14. The connector according to any preceding claim which is hand releasable.

## Patentansprüche

1. Verbindungsanordnung für den Transport von Flüssigkeiten, wobei die Verbindungsanordnung ein Rohr (30), das eine Längsbohrung, einen ersten Abschnitt (62B) und einen zweiten Abschnitt (31) und einen Abschnitt (34) mit vergrößertem Durchmesser, der fest mit dem zweiten Abschnitt verbunden ist, aufweist,
ein Buchsengehäuse (12), das eine durchgehende Längsbohrung (22, 24, 26, 28, 29) aufweist, wobei das Buchsengehäuse des weiteren eine im wesentlichen seitliche Anlagewand aufweist und der erste Abschnitt (62B) außerhalb des Gehäuses angeordnet ist,
eine Dichtung (50), die zu einem nutfreien inneren Abschnitt der Bohrung (24) des Buchsengehäuses abdichtet ist, und
ein Feststellteil (138), das einen Abschnitt aufweist, der sich in der Bohrung (29) des Gehäuses, längs und innerhalb zu der Anlagewand ausdehnt, wobei das Gehäuse (12) Mittel (28) zur Anlage an dem Feststellteil (138) aufweist, damit das Rohr (30) nicht von dem Gehäuse (12) trennbar ist, umfaßt,
dadurch gekennzeichnet,
daß ein zweiter Abschnitt (31) des Rohres (30), das einstückig mit dem ersten Abschnitt (62B) ist, sich innerhalb des Gehäuses erstreckt und daß die Dichtung (50) einen nutfreien peripheren Abschnitt des zweiten Abschnitts (31) umgibt und zu diesem dichtet, daß der Abschnitt (34) mit vergrößertem Durchmesser direkt gegen eine Seite des Feststellteils (138) anliegt oder gegen eine Seite des Feststellteils unter zwischenschaltung eines mittleren Feststellelementes (138A), das zwischen dem Abschnitt (34) mit vergrößertem Durchmesser und dem Feststellteil (138) angeordnet ist, anliegt, daß eine Buchse (33, 34A) fest mit dem zweiten Abschnitt (31) verbunden ist und daß die Buchse (34A) nahe dem Endabschnitt des Rohres (30) angeordnet ist, um die Dichtung (50) auf dem Rohr (30) festzusetzen.

2. Verbindungsanordnung nach Anspruch 1, wobei eine Buchse (33, 34A) zwischen der Dichtung (50) und dem Ende (31) des Rohres, das in der Längsbohrung aufgenommen ist, angeordnet ist.

3. Verbindungsanordnung nach Anspruch 1, wobei eine Buchse (33) zwischen dem Abschnitt (34) mit vergrößertem Durchmesser und der Dichtung (50) angeordnet ist.

4. Verbindungsanordnung nach Anspruch 1, wobei eine erste Buchse (33, 34A) zwischen der Dichtung (50) und dem Ende (31) des Rohres, das in der Längsbohrung aufgenommen ist, angeordnet ist, und eine zweite Buchse (33) zwischen der Dichtung (50) und dem Abschnitt (34) mit vergrößertem Durchmesser angeordnet ist.

5. Verbindungsanordnung nach Anspruch 4, wobei der Abschnitt (34) mit vergrößertem Durchmesser das Abweichen der Rohrachse von der Gehäuseachse nicht begrenzt, wobei eine der Buchsen (33) die Begrenzung ausübt und die Buchse nicht aus dem Rohr herausbewegbar ist und zwischen dem Abschnitt (34) mit vergrößertem Durchmesser und der Dichtung (50) angeordnet ist.

6. Verbindungsanordnung nach einem der vorangehenden Ansprüche, wobei das Rohr an seiner Innenseite durch eine separate Verstärkung (32), die dem Ende (31) des Rohres, das in der Längsbohrung aufgenommen ist, angeordnet ist, verstärkt ist.

7. Verbindungsanordnung nach Anspruch 6, wobei die Verstärkung (32) einen Abschnitt 5 (34B), der ein Abweichen der Rohrachse von der Gehäuseachse begrenzt und das Entfernen der Dichtung (50) von dem Rohr verhindert, umfaßt.

8. Verbindungsanordnung nach Anspruch 7, wobei der Abschnitt (34B) der Verstärkung das Entfernen der Buchse (33, 34A), die zwischen der Dichtung (50) und dem Ende (31) des Rohres angeordnet ist, verhindert und die Buchse (33, 34A) auch zur Begrenzung des Abweichens der Rohrachse von der Gehäuseachse dient.

9. Verbindungsanordnung nach einem der Ansprüche 1 bis 8, wobei der Abschnitt (34) mit vergrößertem Durchmesser durch eine separate Buchse, die dauerhaft mit dem Rohr verbunden ist, dargestellt ist.

10. Verbindungsanordnung nach einem der vorangehenden Ansprüche, wobei ein Ring (138A) zwischen dem Abschnitt (34) mit vergrößertem Durchmesser und dem Feststellteil (138) angeordnet ist.

11. Verbindungsanordnung nach einem der vorangehenden Ansprüche, die ein Mittel umfaßt, das das Feststellteil (138) in die Bohrung des Gehäuses überführt.

12. Verbindungsanordnung nach Anspruch 11, wobei das Mittel (139) eine Verringerung des Außendurchmessers des Feststellteils bewirkt.

13. Verbindungsanordnung nach einem der vorangehenden Ansprüche, wobei die Dichtung (50) den inneren Abschnitt des Gehäuses gegen Eindringen von Verunreinigungen von der Außenseite des Rohres und des Gehäuse abdichtet.

14. Verbindungsanordnung nach einem der vorangehenden Ansprüche, die per Hand gelöst werden kann.

## Revendications

1. Ensemble de connecteur pour utilisation dans une communication de fluide, ledit ensemble de connecteur comportant :
un conduit mâle (30) ayant un alésage longitudinal, une première partie (62B) et une deuxième partie (31) et un élément de diamètre accru (34) fixé fermement sur la deuxième partie;
un logement femelle (12) ayant un alésage longitudinal (22, 24, 26, 28, 29) à travers, ledit logement femelle ayant en outre une paroi de butée sensiblement latérale, la première partie (62B) étant disposée à l'extérieur du logement;
un joint d'étanchéité (50) assurant l'étanchéité contre une partie interne non rainurée (24) de l'alésage dans ledit logement femelle; et
un élément de retenue (138) ayant une partie qui s'écarte à l'intérieur dudit alésage de logement femelle (29) longitudinalement à l'intérieur jusqu'à ladite paroi de butée, ledit logement (12) comprenant des moyens (28) destinés à buter contre l'élément de retenue (138) dans le but d'empêcher la séparation dudit conduit (30) dudit logement (12);
caractérisée en ce qu'une deuxième partie (31) dudit conduit mâle (30) qui est d'un seul tenant avec ladite première partie (62B) s'étend à l'intérieur dudit logement femelle, en ce que le joint d'étanchéité (50) entoure et assure l'étanchéité avec une partie périphérique non rainurée de ladite deuxième partie (31), en ce que ledit élément de diamètre accru (34) bute directement sur un côté dudit élément de retenue (138) ou bute sur un côté dudit élément de retenue par un élément de retenue intermédiaire (138A) interposé entre ledit élément de diamètre accru (34) et ledit élément de retenue (138), en ce qu'un manchon (33, 34A) est fixé fermement sur ladite deuxième partie (31) et en ce que le manchon (34A) est disposé près de la partie d'extrémité du conduit mâle (30) afin de retenir le joint d'étanchéité (50) sur le conduit mâle (30).

2. Connecteur selon la revendication 1, dans lequel un manchon (33, 34A) est disposé entre ledit joint d'étanchéité (50) et l'extrémité (31) du conduit reçu dans ledit alésage longitudinal.

3. Connecteur selon la revendication 1, dans lequel un manchon (33) est disposé entre ledit élément de diamètre accru (34) et ledit joint d'étanchéité (50).

4. Connecteur selon la revendication 1, dans lequel il y a un premier manchon (33, 34A) disposé entre le joint d'étanchéité (50) et l'extrémité (31) du conduit reçu dans ledit alésage longitudinal et un deuxième manchon (33) disposé entre le joint d'étanchéité (50) et l'élément de diamètre accru (34).

5. Connecteur selon la revendication 4, dans lequel ledit élément de diamètre accru (34) ne limite pas l'écart de l'axe de conduit par rapport à l'axe de logement, un desdits manchons (33) réalisant ladite limitation, ledit manchon n'étant pas amovible dudit conduit et étant disposé entre ledit élément de diamètre accru (34) et ledit joint d'étanchéité (50).

6. Connecteur selon l'une quelconque des revendications précédentes, dans lequel ledit conduit (30) est renforcé sur l'intérieur par un renfort séparé (32) qui est disposé de façon adjacente à l'extrémité (31) dudit conduit qui est reçu dans ledit alésage longitudinal.

7. Connecteur selon la revendication 6, dans lequel ledit renfort (32) comprend une partie (34B) qui limite l'écart de l'axe de conduit par rapport à l'axe de logement et empêche le retrait dudit joint d'étanchéité (50) dudit conduit.

8. Connecteur selon la revendication 7, dans lequel ladite partie (34B) dudit renfort empêche le retrait du manchon (33, 34A) qui se trouve entre ledit joint d'étanchéité (50) et ladite extrémité (31) du conduit, ledit manchon (33, 34A) agissant également afin de limiter l'écart dudit axe de conduit par rapport au dit axe de logement.

9. Connecteur selon l'une quelconque des revendications 1 à 8, dans lequel ledit élément de diamètre accru (34) est un manchon séparé qui est fixé de façon permanente sur ledit conduit.

10. Connecteur selon l'une quelconque des revendications précédentes, dans lequel il y a un anneau (138A) interposé entre ledit élément de diamètre accru (34) et ledit élément de retenue (138).

11. Connecteur selon l'une quelconque des revendications précédentes, qui comprend des moyens (139) destinés à guider ledit élément de retenue (138) dans l'alésage dudit logement.

12. Connecteur selon la revendication 11, dans lequel lesdits moyens (139) provoquent une réduction du diamètre extérieur dudit élément de retenue.

13. Connecteur selon l'une quelconque des revendications précédentes, dans lequel ledit joint d'étanchéité (50) assure l'étanchéité de la partie interne dudit logement par rapport à l'intrusion de matières depuis l'extérieur dudit conduit et dudit logement.

14. Connecteur selon l'une quelconque des revendications précédentes, qui peut être libéré à la main.
